# EUROPÄISCHE PATENTSCHRIFT

(11) **EP 4 223 097 B1**
(45) Veröffentlichungstag und Bekanntmachung des Hinweises auf die Patenterteilung: **03.12.2025**
(21) Anmeldenummer: 23401002.3
(22) Anmeldetag: 23.01.2023
(51) Int. Cl.: A01C 7/04, A01C 7/10

(54) **LANDWIRTSCHAFTLICHE MASCHINE MIT ÜBERWACHUNG DER AUFNAHMEFÄHIGKEIT EINES VEREINZELUNGSELEMENTS**
AGRICULTURAL MACHINE WITH MONITORING OF THE CAPACITY OF A SEPARATION ELEMENT TO RECEIVE
MACHINE AGRICOLE AVEC SURVEILLANCE DE LA CAPACITÉ DE RÉCEPTION D'UN ÉLÉMENT DE SÉPARATION

(30) Priorität: 03.02.2022 DE 102022102543
(43) Veröffentlichungstag der Anmeldung: 09.08.2023
(73) Patentinhaber: Amazonen-Werke H. Dreyer SE & Co. KG, 49205 Hasbergen (DE)
(72) Erfinder: Mertens, Daniel, 26121 Oldenburg (DE); Evers, Stephan, 49078 Osnabrück (DE)

(56) Entgegenhaltungen:
- EP-A1- 3 020 263
- DE-A1- 102011 001 949
- US-A1- 2011 046 776

## Beschreibung

Die Erfindung betrifft ein Verfahren zum Überwachen der Aufnahmefähigkeit von Kornaufnahmen eines Vereinzelungselements einer Kornvereinzelungseinrichtung einer Einzelkornsämaschine nach dem Oberbegriff des Patentanspruchs 1, ein Überwachungssystem nach dem Oberbegriff des Patentanspruchs 13 und eine Einzelkornsämaschine nach dem Oberbegriff des Patentanspruchs 14.

Einzelkornsämaschinen weisen üblicherweise Kornvereinzelungseinrichtungen auf, mittels welchen die Saatkörner vor der Ablage auf die landwirtschaftliche Nutzfläche vereinzelt werden. Die Kornvereinzelung erfolgt dabei regelmäßig unter Verwendung eines Vereinzelungselements, welches mehrere Kornaufnahmen zur Aufnahme von einzelnen Saatkörnern umfasst. Im Stand der Technik sind beispielsweise scheibenförmige Vereinzelungselemente bekannt, deren Kornaufnahmen als Ausnehmungen oder Aufnahmetaschen in einem Scheibenkörper ausgebildet sind. Darüber hinaus sind trommelförmige Vereinzelungselemente bekannt.

Die Kornaufnahmen können während des Sävorgangs verstopfen oder aus anderen Gründen blockiert werden, sodass die Kornaufnahmefähigkeit der Kornaufnahmen beeinträchtigt und die Kornvereinzelung somit gestört wird.

In der Praxis wird die Kornaufnahmefähigkeit der Kornaufnahmen entweder temporär oder dauerhaft beeinträchtigt. Bei einer temporären Beeinträchtigung der Kornaufnahmefähigkeit löst sich beispielsweise eine Verstopfung der Kornaufnahme während des Sävorgangs ohne die Notwendigkeit eines Bedienereingriffs wieder auf. Temporäre Beeinträchtigungen der Kornaufnahmefähigkeit beeinträchtigen den Sävorgang somit meist nur unwesentlich. Dauerbelegungen von Kornaufnahmen führen hingegen häufig zu einer erheblichen Beeinträchtigung des Sävorgangs, da sich eine Vielzahl von Fehlstellen ergibt, die letztendlich zu einem deutlichen Ertragsverlust führen.

Aus den Druckschriften DE 198 45 860 A1, DE 39 08 665 A1 und DE 10 2004 011 302 A1 sind Vorrichtungen zur Erfassung und Überwachung von Saatkörnern bekannt. Diese und andere Vorrichtungen eignen sich jedoch nicht zur Identifikation einer die Kornaufnahmefähigkeit beeinträchtigenden Dauerbelegung von Kornaufnahmen von Vereinzelungselementen. Eine Vorrichtung zum Überwachen der Belegung von Kornaufnahmen von Vereinzelungselementen ist in EP 3 020 263 A1, DE 10 2011 001 949 A1 oder US 2011 046 776 A1 gezeigt.

Die der Erfindung zugrundeliegende Aufgabe besteht also darin, eine dauerhafte Funktionsbeeinträchtigung einer Kornvereinzelungseinrichtung aufgrund einer Dauerbelegung einer Kornaufnahme möglichst frühzeitig und mit einer hohen Sicherheit erfassen zu können.

Die Aufgabe wird durch ein Verfahren nach Anspruch 1 gelöst.

Eine Unregelmäßigkeit beim Erfassen der Saatkörner weist darauf hin, dass eine Kornaufnahme nicht am Vereinzelungsvorgang teilgenommen hat. Die Kornaufnahme kann also verstopft oder aus anderen Gründen blockiert sein. Wenn diese Unregelmäßigkeit zyklisch wiederkehrt, liegt eine Dauerbelegung der Kornaufnahme vor, sodass die Kornaufnahme dauerhaft nicht am Vereinzelungsvorgang teilnimmt. Die Dauerbelegung einer Kornaufnahme führt zu einer regelmäßigen Abwesenheit von Saatgut zu Zeitpunkten, an denen bei einem unverstopften Vereinzelungselement ein Saatkorn erfasst werden müsste. Das erfindungsgemäße Verfahren erlaubt also eine frühzeitige und sichere Erfassung einer Funktionsbeeinträchtigung einer Kornvereinzelungseinrichtung aufgrund einer Dauerbelegung einer Kornaufnahme.

Das erfindungsgemäße Verfahren umfasst vorzugsweise das Vereinzeln von Saatkörnern mittels der Kornvereinzelungseinrichtung. Beim Vereinzeln der Saatkörner lagert sich in einem Aufnahmebereich der Kornvereinzelungseinrichtung Saatgut an den Kornaufnahmen des Vereinzelungselements an. Das an den Kornaufnahmen angelagerte Saatgut wird dann mittels des Vereinzelungselements von dem Aufnahmebereich in einen Abgabebereich der Kornvereinzelungseinrichtung transportiert und dort in einen Korntransportpfad abgegeben.

In einer bevorzugten Ausführungsform des erfindungsgemäßen Verfahrens untersucht die elektronische Auswerteeinrichtung zum Ermitteln der zyklisch wiederkehrenden Unregelmäßigkeiten beim Erfassen der Saatkörner ein Sensorsignal der als Korndetektionssensor ausgebildeten Korndetektionseinrichtung. In diesem Fall ermittelt die elektronische Auswerteeinrichtung vorzugsweise zyklisch wiederkehrende Unregelmäßigkeiten im Sensorsignal des Korndetektionssensors. Der Korndetektionssensor ist vorzugsweise ein berührungslos arbeitender Sensor. Der Korndetektionssensor kann beispielsweise ein optischer Sensor sein. Alternativ untersucht die elektronische Auswerteeinrichtung zum Ermitteln der zyklisch wiederkehrenden Unregelmäßigkeiten beim Erfassen der Saatkörner Bildaufnahmen der als Korndetektionskamera ausgebildeten Korndetektionseinrichtung. In diesem Fall ermittelt die elektronische Auswerteeinrichtung vorzugsweise zyklisch wiederkehrende Unregelmäßigkeiten in den Bildaufnahmen der Korndetektionskamera. Die Korndetektionskamera ist vorzugsweise eine Zeilenkamera, insbesondere ein CCD-Zeilenkamera.

Es ist darüber hinaus ein erfindungsgemäßes Verfahren bevorzugt, bei welchem die Korndetektionseinrichtung vereinzelte Saatkörner entlang eines Korndetektionspfads für Saatkörner und/oder innerhalb einer Saatgutleitung erfasst. Der Korntransportpfad und/oder die Saatgutleitung befinden sich vorzugsweise zwischen der Vereinzelungseinrichtung, in welcher die Saatkörner vereinzelt werden, und einer Abgabeöffnung, über welche die vereinzelten Saatkörner in Richtung einer Ablagefurche auf die landwirtschaftliche Nutzfläche abgegeben werden. Die Korndetektionseinrichtung weist vorzugsweise einen Detektionsbereich auf, wobei der Korntransportpfad durch den Detektionsabschnitt verläuft und/oder wobei der Detektionsbereich innerhalb der Saatgutleitung liegt.

In einer anderen bevorzugten Ausführungsform des erfindungsgemäßen Verfahrens führt das Vereinzelungselement während des Vereinzelungsvorgangs eine Rotationsbewegung aus, wobei die elektronische Auswerteeinrichtung zur Identifikation einer die Kornaufnahmefähigkeit beeinträchtigenden Dauerbelegung einer Kornaufnahme die zyklisch wiederkehrenden Unregelmäßigkeiten beim Erfassen der Saatkörner unter Berücksichtigung der Drehzahl des Vereinzelungselements auswertet. Das Vereinzelungselement kann beispielsweise eine rotierend angetriebene Vereinzelungsscheibe oder Vereinzelungstrommel sein. Die Kornaufnahmen können Aufnahmeausnehmungen oder Aufnahmeöffnungen in der Vereinzelungsscheibe sein. Die Drehzahländerungen des Vereinzelungselements können von der elektronischen Auswerteeinrichtung bei der Identifikation einer die Kornaufnahmefähigkeit beeinträchtigenden Dauerbelegung einer Kornaufnahme ebenfalls berücksichtigt werden.

In einer vorteilhaften Weiterbildung des erfindungsgemäßen Verfahrens wertet die elektronische Auswerteeinrichtung zur Identifikation einer die Kornaufnahmefähigkeit beeinträchtigenden Dauerbelegung einer Kornaufnahme die zyklisch wiederkehrenden Unregelmäßigkeiten beim Erfassen der Saatkörner unter Berücksichtigung der Vortriebsgeschwindigkeit und/oder eines eingestellten Ablageabstands für die Saatkörner aus. Die elektronische Auswerteeinrichtung kann zur Identifikation einer die Kornaufnahmefähigkeit beeinträchtigenden Dauerbelegung einer Kornaufnahme auch Änderungen der Vortriebsgeschwindigkeit berücksichtigen. Alternativ oder zusätzlich wertet die elektronische Auswerteeinrichtung zur Identifikation einer die Kornaufnahmefähigkeit beeinträchtigenden Dauerbelegung einer Kornaufnahme die zyklisch wiederkehrenden Unregelmäßigkeiten beim Erfassen der Saatkörner unter Berücksichtigung der Anzahl der Kornaufnahmen des Vereinzelungselements aus. Die Anzahl der Kornaufnahmen des Vereinzelungselements kann auf einem Speicher hinterlegt sein, auf welchen die elektronische Auswerteeinrichtung Zugriff hat. Die Anzahl der Kornaufnahmen des Vereinzelungselements kann abgefragt und/oder von einem Bediener mittels einer Eingabe, beispielsweise auf einem Bedienterminal oder einem mobilen Endgerät, mitgeteilt werden.

Es ist darüber hinaus ein erfindungsgemäßes Verfahren vorteilhaft, bei welchem die elektronische Auswerteeinrichtung zur Identifikation einer die Kornaufnahmefähigkeit beeinträchtigenden Dauerbelegung einer Kornaufnahme den zeitlichen Abstand von aufeinanderfolgenden Saatkörnern untersucht. Wenn die Korndetektionseinrichtung ein Korndetektionssensor ist, untersucht die elektronische Auswerteeinrichtung vorzugsweise den zeitlichen Abstand von aufeinanderfolgenden Signalausschlägen im Sensorsignal des Korndetektionssensors. Wenn die Korndetektionseinrichtung eine Korndetektionskamera ist, wird der zeitliche Abstand von aufeinanderfolgenden Saatkörnern mittels Bildauswertung untersucht. Das Verfahren umfasst vorzugsweise das Erfassen der zeitlichen Abstände von aufeinanderfolgenden Saatkörnern. Wenn die Korndetektionseinrichtung ein Korndetektionssensor ist, umfasst das Verfahren also vorzugsweise das Erfassen der zeitlichen Abstände von Signalausschlägen im Sensorsignal des Korndetektionssensors. Wenn die Korndetektionseinrichtung eine Korndetektionskamera ist, erfolgt das Erfassen der zeitlichen Abstände von aufeinanderfolgenden Saatkörnern mittels Bildauswertung. Vorzugsweise vergleicht die elektronische Auswerteeinrichtung zeitliche Abstände von aufeinanderfolgenden Saatkörnern miteinander.

Es ist darüber hinaus ein erfindungsgemäßes Verfahren bevorzugt, bei welchem die elektronische Auswerteeinrichtung zur Identifikation einer die Kornaufnahmefähigkeit beeinträchtigenden Dauerbelegung einer Kornaufnahme zyklisch wiederkehrende Erhöhungen der zeitlichen Abstände von aufeinanderfolgenden Saatkörnern ermittelt, welche außerhalb eines zeitlichen Toleranzbereichs für die zeitlichen Abstände von aufeinanderfolgenden Saatkörnern liegen. Der Toleranzbereich kann beispielsweise vorgegeben sein oder von der Auswerteeinrichtung ermittelt werden. Wenn der Toleranzbereich von der Auswerteeinrichtung ermittelt wird, kann die Auswerteeinrichtung bei Ermitteln des Toleranzbereichs beispielsweise die zeitlichen Abstände einer Vielzahl von aufeinanderfolgenden Saatkörnern berücksichtigen, insbesondere deren Mittelwert und/oder deren Standardabweichung von einem Mittelwert. Der Toleranzbereich kann auch eine zulässige vorgegebene oder ermittelte absolute oder prozentuale Abweichung von einem Mittelwert sein. Wenn die Korndetektionseinrichtung ein Korndetektionssensor ist, ermittelt die elektronische Auswerteeinrichtung vorzugsweise zyklisch wiederkehrende Erhöhungen der zeitlichen Abstände von aufeinanderfolgenden Signalausschlägen im Sensorsignal des Korndetektionssensors, welche außerhalb eines Toleranzbereichs für die zeitlichen Abstände von aufeinanderfolgenden Signalausschlägen im Sensorsignal des Korndetektionssensors liegen. Wenn die Korndetektionseinrichtung eine Korndetektionskamera ist, erfolgt das Identifizieren von zyklisch wiederkehrenden Erhöhungen der zeitlichen Abstände von aufeinanderfolgenden Saatkörnern mittels Bildauswertung. Der zeitliche Abstand der Saatkörner bei Verwendung eines Vereinzelungselements ohne dauerbelegte Kornaufnahmen ergibt sich aus der Drehzahl des Vereinzelungselements und der Anzahl der Kornaufnahmen des Vereinzelungselements. Durch eine Drehzahländerung am Vereinzelungselement, beispielsweise aufgrund einer Änderung der Fahrgeschwindigkeit, verändert sich auch der zeitliche Abstand zwischen aufeinanderfolgenden Saatkörnern. Wenn der zeitliche Abstand zwischen aufeinanderfolgenden Saatkörnern außerhalb eines zeitlichen Toleranzbereichs für die zeitlichen Abstände von aufeinanderfolgenden Saatkörnern liegt und diese Abweichung zyklisch wiederkehrt, ist die Kornaufnahmefähigkeit einer Kornaufnahme beeinträchtigt.

In einer weiteren bevorzugten Ausführungsform des erfindungsgemäßen Verfahrens ermittelt die elektronische Auswerteeinrichtung zur Identifikation einer die Kornaufnahmefähigkeit beeinträchtigenden Dauerbelegung einer Kornaufnahme zyklisch wiederkehrende Saatkorn-Fehlstellen. Die Saatkorn-Fehlstellen werden auf Grundlage des Signals oder der Daten der Korndetektionseinrichtung von der elektronischen Auswerteeinrichtung identifiziert. Wenn die Korndetektionseinrichtung ein Korndetektionssensor ist, identifiziert die elektronische Auswerteeinrichtung vorzugsweise zyklisch wiederkehrende ausbleibende Signalausschläge. Vorzugsweise umfasst das Verfahren in diesem Fall auch das Erfassen von Signalausschlägen bzw. das Erfassen von ausbleibenden Signalausschlägen in dem Sensorsignal des Korndetektionssensors.

In einer Weiterbildung des erfindungsgemäßen Verfahrens ermittelt die elektronische Auswerteeinrichtung zur Identifikation einer die Kornaufnahmefähigkeit beeinträchtigenden Dauerbelegung einer Kornaufnahme zyklisch wiederkehrende Abweichungen von einem Soll-Zeitabstand zwischen aufeinanderfolgenden Saatkörnern. Wenn die Korndetektionseinrichtung ein Korndetektionssensor ist, ermittelt die elektronische Auswerteeinrichtung Abweichungen von einem Soll-Zeitabstand zwischen aufeinanderfolgenden Signalausschlägen im Sensorsignal des Korndetektionssensors. Der Soll-Zeitabstand ergibt sich aus der Drehzahl des Vereinzelungselements und der Anzahl der Kornaufnahmen des Vereinzelungselements. Durch eine Drehzahländerung am Vereinzelungselement, beispielsweise aufgrund einer Änderung der Fahrgeschwindigkeit, verändert sich auch der Soll-Zeitabstand zwischen aufeinanderfolgenden Saatkörnern bzw. zwischen aufeinanderfolgenden Signalausschlägen im Sensorsignal des Korndetektionssensors. Wenn der tatsächliche Zeitabstand zwischen aufeinanderfolgenden Saatkörnern bzw. Signalausschlägen dem Doppelten des Soll-Zeitabstands entspricht, weist eine Kornaufnahme eine unbeabsichtigte Dauerbelegung auf.

In einer anderen bevorzugten Ausführungsform des erfindungsgemäßen Verfahrens erfasst die Korndetektionseinrichtung die Saatkörner innerhalb der Kornaufnahmen des Vereinzelungselements. Die Korndetektionseinrichtung ist vorzugsweise teilweise oder vollständig an oder innerhalb der Kornvereinzelungseinrichtung angeordnet. Die Korndetektionseinrichtung kann Bestandteil der Kornvereinzelungseinrichtung sein.

In einer weiteren bevorzugten Ausführungsform des erfindungsgemäßen Verfahrens ist die Korndetektionseinrichtung in der Kornvereinzelungseinrichtung angeordnet, wobei ein Detektionsbereich der Kornvereinzelungseinrichtung auf einen Durchlaufpfad der Kornaufnahmen des Vereinzelungselements gerichtet ist und die Korndetektionseinrichtung Saatkörner innerhalb der Kornaufnahmen des Vereinzelungselements während der Rotationsbewegung des Vereinzelungselements erfasst. Die Korndetektionseinrichtung ist vorzugsweise im Nahbereich des Vereinzelungselements angeordnet. Es können auch mehrere Korndetektionseinrichtungen vorhanden sein, beispielsweise eine Korndetektionseinrichtung pro Kornaufnahme. Vorzugsweise werden die Kornaufnahmen durch die Korndetektionseinrichtung nach Passieren des Abgabebereichs und vor Erreichen des Aufnahmebereichs durchleuchtet, sodass eine unbeabsichtigte Dauerbelegung von Kornaufnahmen erfasst werden kann. Wenn die Korndetektionseinrichtung ein Korndetektionssensor ist, entspricht beispielsweise jedes Sensorsignal oder jeder Signalausschlag einer freien Kornaufnahme. Ein fehlendes Signal oder ein fehlender Signalausschlag weist in diesem Fall auf eine belegte Kornaufnahme hin. Fehlt das Signal bzw. der Signalausschlag regelmäßig, ist von einer Dauerbelegung, beispielsweise aufgrund einer Verstopfung, auszugehen.

Es ist darüber hinaus ein erfindungsgemäßes Verfahren beansprucht, bei welchem die elektronische Auswerteeinrichtung die Identifikation einer die Kornaufnahmefähigkeit beeinträchtigenden Dauerbelegung einer Kornaufnahme protokolliert und/oder bei der Identifikation einer die Kornaufnahmefähigkeit beeinträchtigenden Dauerbelegung einer Kornaufnahme das Ausführen einer an den Maschinenbediener gerichteten Hinweismaßnahme verursacht. Die Hinweismaßnahme kann eine visuelle oder eine akustische Warnnachricht sein. Es kann eine Empfehlung ausgegeben werden, beispielsweise ob bzw. wann das Vereinzelungselement gereinigt werden soll, um unter einem Fehlerband zu bleiben. Es kann eine Reinigungsaufforderung ausgegeben werden.

In einer vorteilhaften Weiterbildung des erfindungsgemäßen Verfahrens ermittelt die elektronische Auswerteeinrichtung die Anzahl von dauerbelegten Kornaufnahmen. Wenn die Korndetektionseinrichtung ein Korndetektionssensor ist, wird zur Ermittlung der Anzahl von dauerbelegten Kornaufnahmen das Sensorsignal des Korndetektionssensors untersucht. Wenn die Korndetektionseinrichtung eine Korndetektionskamera ist, erfolgt die Ermittlung der Anzahl von dauerbelegten Kornaufnahmen mittels Bildauswertung. Treten in einem Zeitintervall, welches das Vereinzelungselement für eine Umdrehung benötigt, zyklisch wiederkehrend mehrere Unregelmäßigkeiten bei der Kornerfassung auf, sind mehrere Kornaufnahmen dauerhaft belegt. Die elektronische Auswerteeinrichtung kann die Anzahl von dauerbelegten Kornaufnahmen überwachen und/oder protokollieren. Vorzugsweise verursacht die elektronische Auswerteeinrichtung bei Erreichen oder Überschreiten eines Grenzwerts an dauerbelegten Kornaufnahmen das Ausführen einer an den Maschinenbediener gerichteten Hinweismaßnahme. Es kann beispielsweise eine Empfehlung ausgegeben werden, ob bzw. ab wann das Vereinzelungselement gereinigt werden soll, um unter einem Fehlerband zu bleiben. Es kann eine Reinigungsaufforderung ausgegeben werden. Bei einfachen und nicht zyklisch wiederkehrenden Unregelmäßigkeiten in der Kornerfassung kann der Bediener auch auf mögliche Ursachen der Unregelmäßigkeiten hingewiesen werden, beispielsweise auf einen verschmutzten, defekten oder fehlerhaft arbeitenden Abstreifer.

Die der Erfindung zugrundeliegende Aufgabe wird ferner durch ein Überwachungssystem der eingangs genannten Art gelöst, wobei das erfindungsgemäße Überwachungssystem eine elektronische Auswerteeinrichtung aufweist, welche dazu eingerichtet ist, zur Identifikation einer die Kornaufnahmefähigkeit beeinträchtigenden Dauerbelegung einer Kornaufnahme zyklisch wiederkehrende Unregelmäßigkeiten beim Erfassen der Saatkörner zu ermitteln. Das erfindungsgemäße Überwachungssystem ist dazu eingerichtet, das Verfahren nach einem der vorstehenden Ausführungsformen auszuführen. Hinsichtlich der Vorteile und Modifikationen des erfindungsgemäßen Überwachungssystems wird somit zunächst auf die Vorteile und Modifikationen des erfindungsgemäßen Verfahrens verwiesen.

Die Korndetektionseinrichtung kann an oder in der Saatgutleitung oder in der Vereinzelungseinrichtung positioniert sein. Ferner kann die Korndetektionseinrichtung derart angeordnet sein, dass sich die Korndetektionseinrichtung während des Ausbringvorgangs oberhalb einer Ablagefurche befindet und Saatkörner in der Ablagefurche und/oder während einer Flugphase in Richtung der Ablagefurche erfasst.

Das Überwachungssystem kann eine elektronische Ausgabeeinrichtung, beispielsweise ein Terminal, aufweisen.

Die der Erfindung zugrundeliegende Aufgabe wird ferner durch eine Einzelkornsämaschine der eingangs genannten Art gelöst, wobei das Überwachungssystem der erfindungsgemäßen Einzelkornsämaschine nach einer der vorstehend beschriebenen Ausführungsformen ausgebildet ist. Hinsichtlich der Vorteile und Modifikationen der erfindungsgemäßen Einzelkornsämaschine wird somit zunächst auf die Vorteile und Modifikationen des erfindungsgemäßen Verfahrens und die Vorteile und Modifikationen des erfindungsgemäßen Überwachungssystems verwiesen.

Die Einzelkornsämaschine weist vorzugsweise mehrere Kornvereinzelungseinrichtungen auf. Jede Kornvereinzelungseinrichtung kann eine Vereinzelungsscheibe aufweisen. Die Einzelkornsämaschine kann eine Saatgutleitung aufweisen, über welche die vereinzelten Saatkörner von der Kornvereinzelungseinrichtung in Richtung einer Abgabeöffnung geführt werden.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel des erfindungsgemäßen Überwachungssystems in einer schematischen Darstellung;
- Fig. 2: ein weiteres Ausführungsbeispiel des erfindungsgemäßen Überwachungssystems in einer schematischen Darstellung;
- Fig. 3: ein weiteres Ausführungsbeispiel des erfindungsgemäßen Überwachungssystems in einer schematischen Darstellung;
- Fig. 4: das in der Fig. 1 abgebildete Überwachungssystem, wobei eine Kornaufnahme des Vereinzelungselements eine die Kornaufnahmefähigkeit beeinträchtigende Dauerbelegung aufweist;
- Fig. 5: ein die mittels des erfindungsgemäßen Verfahrens untersuchten zeitlichen Abstände von aufeinanderfolgenden Saatkörnern wiedergebendes Diagramm, wobei eine Kornaufnahme des Vereinzelungselements eine die Kornaufnahmefähigkeit temporär beeinträchtigende Belegung aufweist;
- Fig. 6: ein die mittels des erfindungsgemäßen Verfahrens untersuchten zeitlichen Abstände von aufeinanderfolgenden Saatkörnern wiedergebendes Diagramm, wobei eine Kornaufnahme des Vereinzelungselements eine die Kornaufnahmefähigkeit dauerhaft beeinträchtigende Dauerbelegung aufweist;
- Fig. 7: ein die mittels des erfindungsgemäßen Verfahrens untersuchten zeitlichen Abstände von aufeinanderfolgenden Saatkörnern wiedergebendes Diagramm, wobei eine Kornaufnahme des Vereinzelungselements eine die Kornaufnahmefähigkeit temporär beeinträchtigende Belegung und eine andere Kornaufnahme des Vereinzelungselements eine die Kornaufnahmefähigkeit dauerhaft beeinträchtigende Dauerbelegung aufweist;
- Fig. 8: ein die mittels des erfindungsgemäßen Verfahrens untersuchten zeitlichen Abstände von aufeinanderfolgenden Saatkörnern wiedergebendes Diagramm, wobei eine Kornaufnahme des Vereinzelungselements eine die Kornaufnahmefähigkeit temporär beeinträchtigende Belegung aufweist und zwei andere Kornaufnahmen des Vereinzelungselements jeweils eine die Kornaufnahmefähigkeit dauerhaft beeinträchtigende Dauerbelegung aufweisen;
- Fig. 9: ein die Signalausschläge der Korndetektionseinrichtung eines erfindungsgemäßen Überwachungssystems wiedergebendes Diagramm, wobei eine Kornaufnahme des Vereinzelungselements eine die Kornaufnahmefähigkeit temporär beeinträchtigende Belegung aufweist;
- Fig. 10: ein die Signalausschläge der Korndetektionseinrichtung eines erfindungsgemäßen Überwachungssystems wiedergebendes Diagramm, wobei eine Kornaufnahme des Vereinzelungselements eine die Kornaufnahmefähigkeit dauerhaft beeinträchtigende Dauerbelegung aufweist;
- Fig. 11: ein die Signalausschläge der Korndetektionseinrichtung eines erfindungsgemäßen Überwachungssystems wiedergebendes Diagramm, wobei eine Kornaufnahme des Vereinzelungselements eine die Kornaufnahmefähigkeit temporär beeinträchtigende Belegung und eine andere Kornaufnahme des Vereinzelungselements eine die Kornaufnahmefähigkeit dauerhaft beeinträchtigende Dauerbelegung aufweist; und
- Fig. 12: ein die Signalausschläge der Korndetektionseinrichtung eines erfindungsgemäßen Überwachungssystems wiedergebendes Diagramm, wobei eine Kornaufnahme des Vereinzelungselements eine die Kornaufnahmefähigkeit temporär beeinträchtigende Belegung aufweist und zwei andere Kornaufnahmen des Vereinzelungselements jeweils eine die Kornaufnahmefähigkeit dauerhaft beeinträchtigende Dauerbelegung aufweisen.

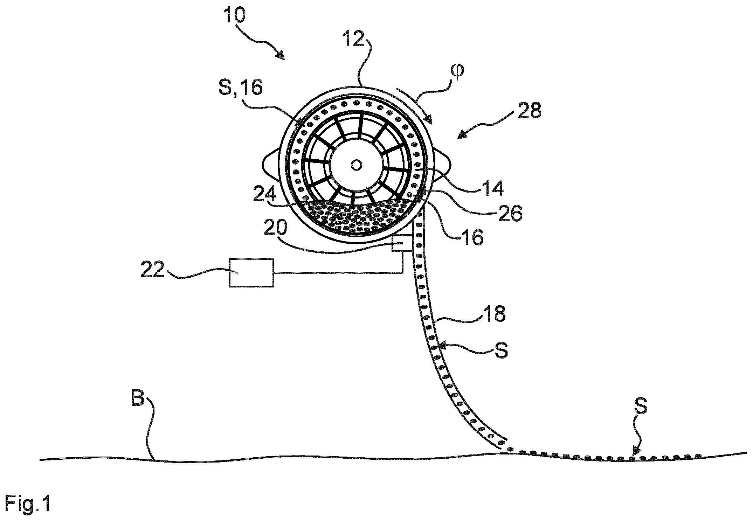

Die Fig. 1 zeigt ein Überwachungssystem 28 zum Überwachen der Aufnahmefähigkeit von Kornaufnahmen 16 eines Vereinzelungselements 14 einer Vereinzelungseinrichtung 10 einer Einzelkornsämaschine. Die Kornvereinzelungseinrichtung 10 dient zum Vereinzeln von Saatkörnern S, sodass die vereinzelten Saatkörner S äquidistant beabstandet auf den Boden B einer landwirtschaftlichen Nutzfläche abgelegt werden können.

Die Kornvereinzelungseinrichtung 10 weist ein Gehäuse 12 auf, wobei das Vereinzelungselement 14 rotatorisch antreibbar in dem Gehäuse angeordnet ist. Das Vereinzelungselement 14 ist eine Vereinzelungsscheibe mit einer Mehrzahl von Kornaufnahmen 16. Die Kornaufnahmen 16 dienen jeweils zum Aufnehmen eines einzelnen Saatkorns S und sind entlang einer Kreisbahn auf dem als Vereinzelungsscheibe ausgebildeten Vereinzelungselement 14 angeordnet.

Beim Vereinzeln von Saatkörnern S lagert sich in einem Aufnahmebereich 24 ein Saatkorn S an den jeweiligen Kornaufnahmen 16 des Vereinzelungselements 14 an. Der Aufnahmebereich 24 kann beispielsweise ein Kornsumpf sein, in welchem sich die Saatkörner S, welche der Kornvereinzelungseinrichtung 10 zugeleitet werden, ansammeln. Das an den Kornaufnahmen 16 angelagerte Saatgut wird dann über eine Rotationsbewegung des Vereinzelungselements 14 von dem Aufnahmebereich 24 in einen Abgabebereich 26 transportiert und dort in eine Saatgutleitung 18 abgegeben. Innerhalb der Saatgutleitung 18 verläuft ein Korntransportpfad für Saatkörner S. Die Saatgutleitung 18 weist eine Abgabeöffnung auf, über welche die Saatkörner S auf dem Boden B der landwirtschaftlichen Nutzfläche abgelegt werden können.

Das Überwachungssystem 28 weist ferner eine Korndetektionseinrichtung 20 zum Erfassen von Saatkörnern S auf. Die Korndetektionseinrichtung 20 ist an der Saatgutleitung 18 angeordnet und dient zum Erfassen von vereinzelten Saatkörnern S innerhalb der Saatgutleitung 18. Die Korndetektionseinrichtung 20 ist ein berührungslos arbeitender Korndetektionssensor. Die Korndetektionseinrichtung 20 ist in dem dargestellten Ausführungsbeispiel ein optischer Sensor. Die Korndetektionseinrichtung 20 ist signalleitend mit einer elektronischen Auswerteeinrichtung 22 verbunden, wobei die elektronische Auswerteeinrichtung 22 zur Identifikation einer die Kornaufnahmefähigkeit beeinträchtigenden Dauerbelegung einer Kornaufnahme 16 zyklisch wiederkehrende Unregelmäßigkeiten beim Erfassen der Saatkörner S ermittelt.

Zum Ermitteln der zyklisch wiederkehrenden Unregelmäßigkeiten beim Erfassen der Saatkörner S untersucht die elektronische Auswerteeinrichtung 22 ein Sensorsignal der als Korndetektionssensor ausgebildeten Korndetektionseinrichtung 20. Die elektronische Auswerteeinrichtung 22 ermittelt zyklisch wiederkehrende Unregelmäßigkeiten im Sensorsignal des Korndetektionssensors 20.

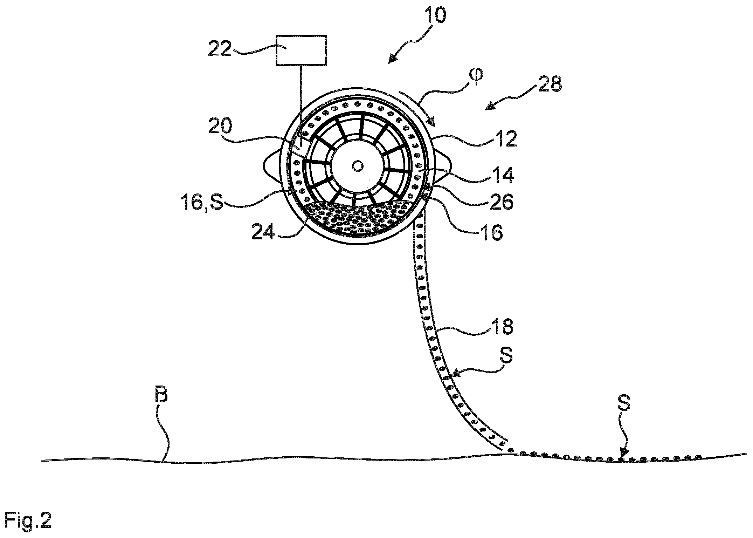

Die Fig. 2 zeigt ein Überwachungssystem 28, bei welchem die Korndetektionseinrichtung 20 in dem Gehäuse 12 der Kornvereinzelungseinrichtung 10 angeordnet ist. Die Korndetektionseinrichtung 20 ist eine Gabellichtschranke, welche auf einen Durchlaufpfad der Kornaufnahmen 16 des Vereinzelungselements 14 gerichtet ist und die Bereiche unmittelbar vor den Kornaufnahmen 16 untersucht. Wenn sich in den Kornaufnahmen 16 ein Saatkorn S befindet, ragt das Saatkorn S aus der Kornaufnahme 16 heraus und wird durch die Korndetektionseinrichtung 20 erfasst. Wenn eine Kornaufnahme 16 verstopft ist und durch die Verstopfung kein Material aus der verstopften Kornaufnahme 16 herausragt, kann über die Korndetektionseinrichtung 20 eine die Kornaufnahmefähigkeit beeinträchtigende Belegung der Kornaufnahme 16 ermittelt werden.

Alternativ kann die Korndetektionseinrichtung 20 ein optischer Korndetektionssensor sein, wobei ein Detektionsbereich der Korndetektionseinrichtung 20 auf einen Durchlaufpfad der Kornaufnahmen 16 des Vereinzelungselements 14 gerichtet ist. Die Korndetektionseinrichtung 20 erfasst Saatkörner S innerhalb der Kornaufnahmen 16 des Vereinzelungselements 14 während der Rotationsbewegung des Vereinzelungselements 14. Die Korndetektionseinrichtung 20 ist im Nahbereich des Vereinzelungselements 14 angeordnet, sodass die Kornaufnahmen durch die Korndetektionseinrichtung 20 durchleuchtet werden können, sodass eine unbeabsichtigte Dauerbelegung von Kornaufnahmen 16 erfasst werden kann. Alternativ kann die Korndetektionseinrichtung 20 auch als Korndetektionskamera ausgebildet sein, sodass mittels Bildauswertung die dauerhafte Belegung von Kornaufnahmen 16 durch Fremdkörper oder anderen Blockaden erfasst werden kann.

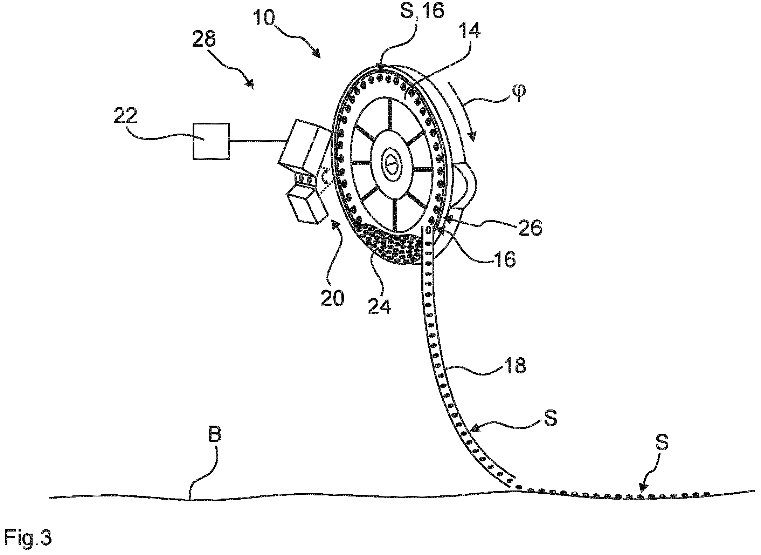

Bei dem in der Fig. 3 dargestellten Überwachungssystem 28 ist die Korndetektionseinrichtung 20 als Korndetektionskamera ausgebildet. Die Korndetektionseinrichtung 20 ist in diesem Ausführungsbeispiel eine Zeilenkamera, nämlich eine CCD-Zeilenkamera. Die elektronische Auswerteeinrichtung 22 untersucht in diesem Fall zum Ermitteln der zyklisch wiederkehrenden Unregelmäßigkeiten beim Erfassen der Saatkörner S Bildaufnahmen der als Korndetektionskamera ausgebildeten Korndetektionseinrichtung 20.

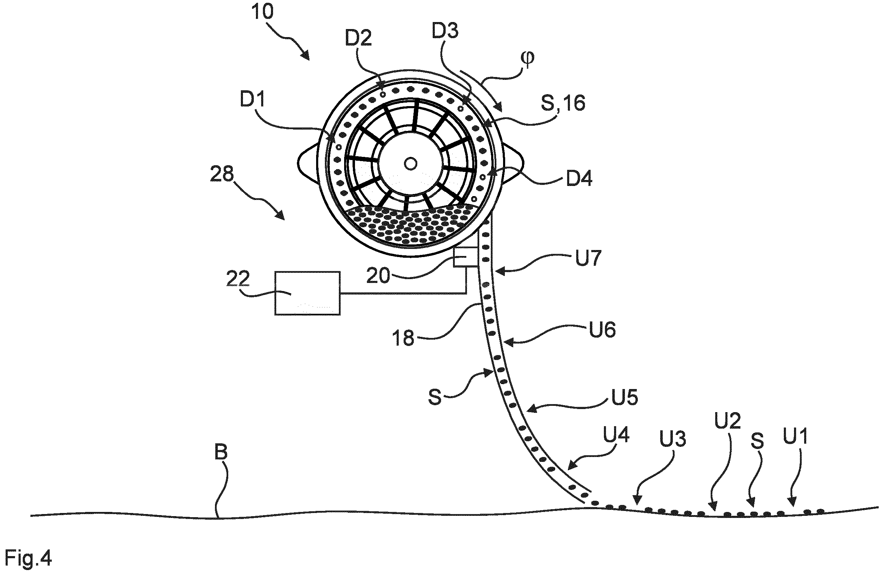

Die Fig. 4 zeigt zyklisch wiederkehrende Unregelmäßigkeiten U1-U7 innerhalb der Saatgutleitung 18 entlang des Korntransportpfads für die Saatkörner S. Die Unregelmäßigkeiten U1-U7 entstehen aufgrund von Dauerbelegungen D1-D4 von Kornaufnahmen 16 des Vereinzelungselements 14. Aufgrund der Dauerbelegungen D1-D4 können die belegten Kornaufnahmen 16 im Aufnahmebereich 24 kein Saatkorn S aufnehmen und dieses in Richtung des Abgabebereichs 26 fördern. Eine einfache Unregelmäßigkeit beim Erfassen der Saatkörner S würde lediglich darauf hinweisen, dass eine Kornaufnahme 16 temporär nicht am Vereinzelungsvorgang teilnimmt. Wenn eine Kornaufnahme 16 jedoch aufgrund einer Verstopfung oder aus anderen Gründen dauerbelegt ist, sodass kein Saatkorn S aufgenommen werden kann, treten zyklisch wiederkehrende Unregelmäßigkeiten U1-U7 beim Erfassen der Saatkörner S auf. Die Dauerbelegung von Kornaufnahmen 16 führt zu einer regelmäßigen Abwesenheit von Saatkörnern S an Zeitpunkten, an denen bei einem unverstopften Vereinzelungselement 14 ein Saatkorn S erfasst werden müsste.

Das Vereinzelungselement 14 führt während des Vereinzelungsvorgangs eine Rotationsbewegung entlang der Drehrichtung φ aus. Die elektronische Auswerteeinrichtung 22 wertet zur Identifikation einer die Kornaufnahmefähigkeit beeinträchtigenden Dauerbelegung einer Kornaufnahme 16 die zyklisch wiederkehrenden Unregelmäßigkeiten U1-U7 beim Erfassen der Saatkörner S unter Berücksichtigung der Drehzahl des Vereinzelungselements 14 aus. Unter Berücksichtigung der Anzahl der Kornaufnahmen 16 des Vereinzelungselements 14 und der Drehzahl des Vereinzelungselements 14 kann die elektronische Auswerteeinrichtung 22 ergänzend überprüfen, ob die Anzahl der Körner und/oder der zeitliche Abstand zwischen den Saatkornfehlstellen durch eine dauerbelegte Kornaufnahme 16 verursacht wird, welche aufgrund der Dauerbelegung nicht am Vereinzelungsvorgang teilnimmt.

Die von der Auswerteeinrichtung 22 durchgeführte Auswertung kann bei Verwendung jeder genannten Korndetektionseinrichtung 20 auf die beschriebene Weise erfolgen.

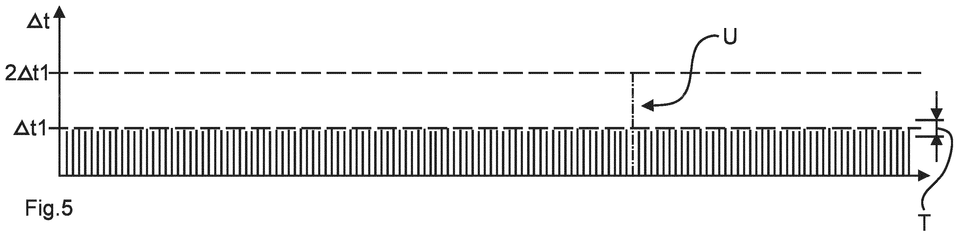

Die Fig. 5 zeigt den zeitlichen Abstand Δt aufeinanderfolgender Saatkörner S, welche beispielhaft von der Korndetektionseinrichtung 20 erfasst wurden. Mit einer Ausnahme weisen die aufeinanderfolgenden Saatkörner S den zeitlichen Abstand Δt1 auf, wobei in einem Toleranzbereich T liegende Abweichungen auftreten können. Das Diagramm zeigt eine Unregelmäßigkeit U, bei welcher der zeitliche Abstand Δt zwischen zwei aufeinanderfolgenden Saatkörnern S dem doppelten Wert von Δt1 entspricht. Aufgrund der Unregelmäßigkeit U ist davon auszugehen, dass eine Kornaufnahme 16 nicht am Vereinzelungsvorgang teilgenommen hat, sodass der zeitliche Abstand Δt zwischen aufeinanderfolgenden Saatkörnern S aufgrund einer Fehlstelle verdoppelt ist. Da die Unregelmäßigkeit U nur einmalig auftritt, erkennt die elektronische Auswerteeinrichtung 22, dass es sich um eine temporäre Belegung der Kornaufnahme 16 handeln muss und keine Dauerbelegung einer Kornaufnahme 16 vorliegt.

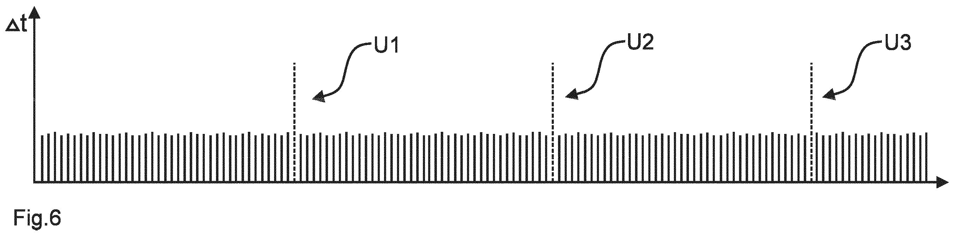

Die Fig. 6 zeigt drei Unregelmäßigkeiten U1-U3 in Bezug auf die zeitlichen Abstände Δt von aufeinanderfolgenden Saatkörnern S. Die Unregelmäßigkeiten U1-U3 treten zyklisch auf, sodass die elektronische Auswerteeinrichtung 22 aufgrund der zyklisch wiederkehrenden Unregelmäßigkeiten U1-U3 beim Erfassen der Saatkörner S eine die Kornaufnahmefähigkeit beeinträchtigende Dauerbelegung einer Kornaufnahme 16 identifiziert.

Ein zyklisches Auftreten von Unregelmäßigkeiten wird identifiziert, wenn der zeitliche Abstand zwischen den Unregelmäßigkeiten und/oder die Anzahl aufeinanderfolgender Saatkörner S zwischen den Unregelmäßigkeiten und/oder die Anzahl der zeitlichen Abstände Δt zwischen aufeinanderfolgenden Saatkörnern S zwischen den Unregelmäßigkeiten über eine festgelegte Zeitdauer und/oder über mehrere Umdrehungen des Vereinzelungselements 14 gleichbleibend ist. Bei der Identifikation kann die Drehzahl und/oder die Drehzahländerung des Vereinzelungselements 14 berücksichtigt werden.

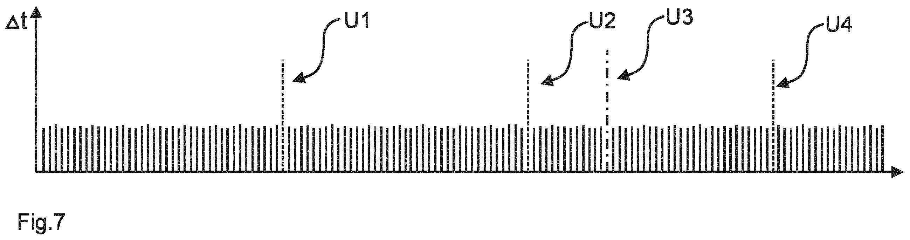

Die Fig. 7 zeigt insgesamt vier Unregelmäßigkeiten U1-U4 in Bezug auf den zeitlichen Abstand Δt von aufeinanderfolgenden Saatkörnern S. Die Unregelmäßigkeiten U1, U2, U4 treten zyklisch auf, sodass die elektronische Auswerteeinrichtung 22 eine die Kornaufnahmefähigkeit beeinträchtigende Dauerbelegung einer Kornaufnahme 16 identifiziert. Die Unregelmäßigkeit U3 tritt lediglich einmalig auf, sodass die elektronische Auswerteeinrichtung 22 der Unregelmäßigkeit U3 eine temporäre Belegung einer Kornaufnahme 16 zuordnen kann. Ihr zeitlicher Abstand zu anderen Unregelmäßigkeiten und/oder die Anzahl aufeinander folgender Saatkörner S und/oder zeitlicher Abstände in der zuvor beschriebenen Weise lassen keine zyklische Wiederkehr erkennen.

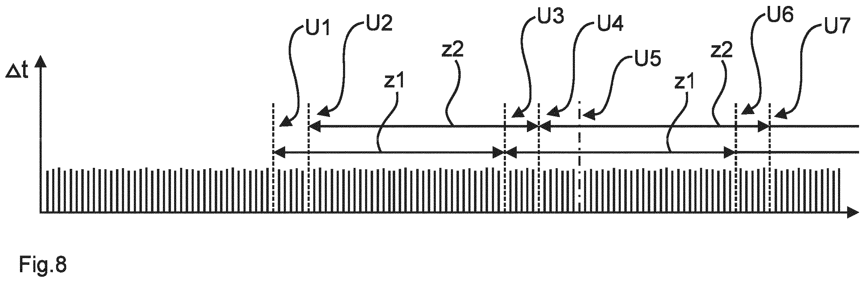

Die Fig. 8 zeigt insgesamt sieben Unregelmäßigkeiten U1-U7 in Bezug auf die zeitlichen Abstände Δt von aufeinanderfolgenden Saatkörnern S. Die elektronische Auswerteinrichtung 22 erkennt, dass die Unregelmäßigkeiten U1, U3, U6 einem ersten Zyklus z1 und die Unregelmäßigkeiten U2, U4, U7 einem zweiten Zyklus z2 zugeordnet werden können. Die Unregelmäßigkeit U5 tritt lediglich einmalig auf und lässt sich keinem Zyklus zuordnen. Insofern kann die elektronische Auswerteeinrichtung 22 aufgrund der Zykluszuordnung der Unregelmäßigkeiten U1-U7 erkennen, dass zwei Kornaufnahmen 16 des Vereinzelungselements 14 dauerbelegt, beispielsweise verstopft sind, und dauerhaft nicht am Vereinzelungsvorgang teilnehmen. Darüber hinaus erkennt die elektronische Auswerteeinrichtung 22, dass eine weitere Kornaufnahme 16 des Vereinzelungselements 14 aufgrund einer temporären Belegung einmalig nicht am Vereinzelungsvorgang teilgenommen hat. Die elektronische Auswerteeinrichtung 22 ermittelt folglich zur Identifikation von die Kornaufnahmefähigkeit beeinträchtigenden Dauerbelegungen von Kornaufnahmen 16 zyklisch wiederkehrende Saatkorn-Fehlstellen. Ferner ermittelt die elektronische Auswerteeinrichtung 22 die Anzahl von dauerbelegten Kornaufnahmen 16 des Vereinzelungselements 14.

Da der zeitliche Abstand zwischen den Unregelmäßigkeiten und/oder die Anzahl aufeinanderfolgender Saatkörner S zwischen den Unregelmäßigkeiten und/oder die Anzahl der zeitlichen Abstände Δt zwischen aufeinanderfolgenden Saatkörnern S zwischen den Unregelmäßigkeiten über eine festgelegte Zeitdauer und/oder über mehrere Umdrehungen des Vereinzelungselements 14 jeweils für den Zyklus z1 und den Zyklus z2 gleichbleibend ist, kann das zyklische Auftreten der Unregelmäßigkeiten U1, U3, U6 und der Unregelmäßigkeiten U2, U4, U7 jeweils einem Zyklus z1 und z2 zugeordnet werden. Dadurch kann die Anzahl der Zyklen und somit der dauerbelegten Kornaufnahmen 16 des Vereinzelungselements 14 ermittelt werden.

Die Zyklen z1 und z2 weisen typischerweise die gleiche Zeitdauer und/oder Anzahl aufeinanderfolgender Saatkörner S zwischen den Unregelmäßigkeiten und/oder Anzahl der zeitlichen Abstände Δt zwischen aufeinanderfolgenden Saatkörnern S zwischen den zyklisch auftretenden Unregelmäßigkeiten auf. Dadurch kann mit größerer Sicherheit das Auftreten zweier Zyklen identifiziert werden. Somit kann zusätzlich eine Verwechslung mit mehreren zufällig auftretenden, insbesondere temporären, Belegungen von Kornaufnahmen 16 vermieden werden.

Die elektronische Auswerteeinrichtung 22 untersucht zur Zuordnung von Unregelmäßigkeiten zu einem Zyklus die zeitlichen Abstände zwischen den Unregelmäßigkeiten und/oder die Anzahl aufeinanderfolgender Saatkörner S zwischen den Unregelmäßigkeiten und/oder die Anzahl der zeitlichen Abstände Δt zwischen aufeinanderfolgenden Saatkörnern S zwischen den Unregelmäßigkeiten über eine festgelegte Zeitdauer und/oder über mehrere Umdrehungen des Vereinzelungselements 14. Unter Berücksichtigung der Drehzahl des Vereinzelungselements 14 und/oder der Anzahl der Kornaufnahmen 16 des Vereinzelungselements 14 kann die elektronische Auswerteeinrichtung 22 dann eine Zykluszuordnung vornehmen und einmalig oder nur kurzzeitig auftretende Dauerbelegungen erkennen.

Die elektronische Auswerteeinrichtung 22 kann die erfassten Dauerbelegungen von Kornaufnahmen 16 protokollieren und bei Erfassen einer Dauerbelegung oder bei Erreichen oder Überschreiten eines Maximalwerts von Dauerbelegungen das Ausführen einer an den Maschinenbediener gerichteten Hinweismaßnahme verursachen. Die Hinweismaßnahme kann eine visuelle oder akustische Warnnachricht sein.

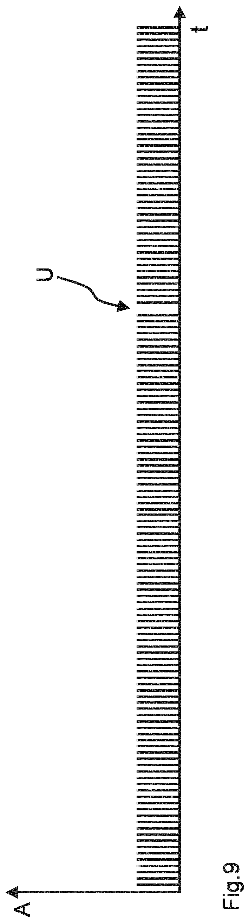

Die Fig. 9 zeigt Signalausschläge A einer beispielhaft als Korndetektionssensor ausgebildeten Korndetektionseinrichtung 20 über die Zeit t. Die Signalausschläge A beziehen sich auf erfasste Saatkörner S. Die elektronische Auswerteeinrichtung 22 des Überwachungssystems 28 ist in diesem Fall dazu eingerichtet, zyklisch wiederkehrende Unregelmäßigkeiten im Sensorsignal der als Korndetektionssensor ausgebildeten Korndetektionseinrichtung 20 zu ermitteln. Die dargestellte Unregelmäßigkeit U ist auf eine einmalig auftretende Fehlstelle zurückzuführen, sodass die elektronische Auswerteeinrichtung 22 erkennt, dass keine Dauerbelegung einer Kornaufnahme 16 des Vereinzelungselements 14 vorliegt.

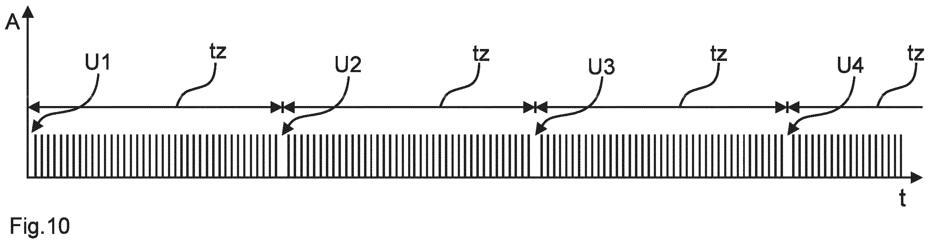

Die Fig. 10 zeigt Unregelmäßigkeiten U1-U4 in den Signalausschlägen A über die Zeit t. Zwischen den Unregelmäßigkeiten U1-U4 liegt jeweils eine Zykluszeit tz, sodass die elektronische Auswerteeinrichtung 22 aufgrund der zyklischen Wiederkehr der Unregelmäßigkeiten U1-U4 erkennt, dass eine die Kornaufnahmefähigkeit beeinträchtigende Dauerbelegung einer Kornaufnahme 16 vorliegt.

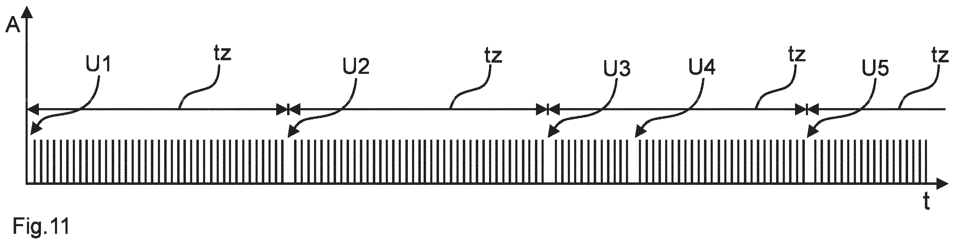

Die Fig. 11 zeigt insgesamt fünf Unregelmäßigkeiten U1-U5 bei den Signalausschlägen A über die Zeit t. Zwischen den Unregelmäßigkeiten U1, U2, U3, U5 liegt die Zykluszeit tz, sodass diese Unregelmäßigkeiten auf eine die Kornaufnahmefähigkeit beeinträchtigende Dauerbelegung einer Kornaufnahme 16 zurückzuführen sind. Die Unregelmäßigkeit U4 tritt einmalig auf, sodass die elektronische Auswerteeinrichtung 22 erkennt, dass diese Unregelmäßigkeit U4 durch eine Temporärbelegung einer Kornaufnahme 16 verursacht wurde.

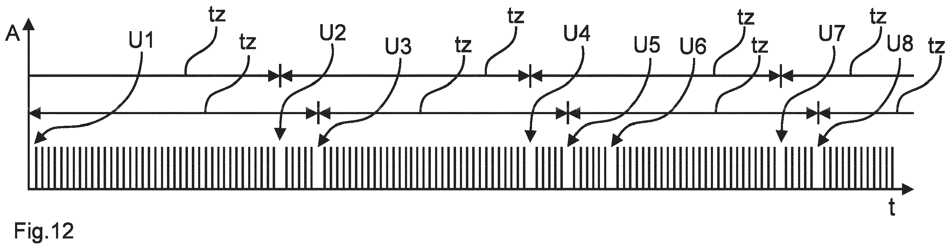

Die Fig. 12 zeigt insgesamt acht Unregelmäßigkeiten U1-U8, wobei die elektronische Auswerteeinrichtung 22 die Unregelmäßigkeiten U1, U2, U4, U7 einem ersten Zyklus und die Unregelmäßigkeiten U3, U5, U8 einem zweiten Zyklus zuordnen kann. Die elektronische Auswerteeinrichtung 22 kann der Unregelmäßigkeit U6 keinem Zyklus zuordnen, sodass diese Unregelmäßigkeit U6 durch eine temporäre Belegung einer Kornaufnahme 16 des Vereinzelungselements 14 verursacht worden sein muss.

### Bezugszeichen

- 10: Kornvereinzelungseinrichtung
- 12: Gehäuse
- 14: Vereinzelungselement
- 16: Kornaufnahmen
- 18: Saatgutleitung
- 20: Korndetektionseinrichtung
- 22: Auswerteeinrichtung
- 24: Aufnahmebereich
- 26: Abgabebereich
- 28: Überwachungssystem

- A: Signalausschläge
- B: Boden
- D1-D4: Dauerbelegungen
- S: Saatkörner
- T: Toleranzbereich
- t: Zeit
- U, U1-U8: Unregelmäßigkeiten
- φ: Drehrichtung
- Δt: zeitlicher Abstand
- Δt1: zeitlicher Abstand
- z1, z2: Zyklen
- tz: Zykluszeiten

## Patentansprüche

1. Verfahren zum Überwachen der Aufnahmefähigkeit von Kornaufnahmen (16) eines Vereinzelungselements (14) einer Kornvereinzelungseinrichtung (10) einer Einzelkornsämaschine, mit dem Schritt:
- Erfassen von Saatkörnern (S) mittels einer Korndetektionseinrichtung (20);
wobei eine elektronische Auswerteeinrichtung (22) zur Identifikation einer die Kornaufnahmefähigkeit beeinträchtigenden Dauerbelegung (D1-D4) einer Kornaufnahme (16) zyklisch wiederkehrende Unregelmäßigkeiten (U, U1-U8) beim Erfassen der Saatkörner (S) ermittelt, wobei die elektronische Auswerteeinrichtung (22) die Identifikation einer die Kornaufnahmefähigkeit beeinträchtigenden Dauerbelegung (D1-D4) einer Kornaufnahme (16) protokolliert und/oder bei der Identifikation einer die Kornaufnahmefähigkeit beeinträchtigenden Dauerbelegung (D1-D4) einer Kornaufnahme (16) das Ausführen einer an den Maschinenbediener gerichteten Hinweismaßnahme verursacht.

2. Verfahren nach Anspruch 1,
**dadurch gekennzeichnet, dass** die elektronische Auswerteeinrichtung (22) zum Ermitteln der zyklisch wiederkehrenden Unregelmäßigkeiten (U, U1-U8) beim Erfassen der Saatkörner (S)
- ein Sensorsignal der als Korndetektionssensor ausgebildeten Korndetektionseinrichtung (20); oder
- Bildaufnahmen der als Korndetektionskamera ausgebildeten Korndetektionseinrichtung (20)
untersucht.

3. Verfahren nach Anspruch 1 oder 2,
**dadurch gekennzeichnet, dass** die Korndetektionseinrichtung (20) vereinzelte Saatkörner (S) entlang eines Korntransportpfads für Saatkörner (S) und/oder innerhalb einer Saatgutleitung (18) erfasst.

4. Verfahren nach einem der vorstehenden Ansprüche,
**dadurch gekennzeichnet, dass** das Vereinzelungselement (14) während des Vereinzelungsvorgangs eine Rotationsbewegung ausführt, wobei die elektronische Auswerteeinrichtung (22) zur Identifikation einer die Kornaufnahmefähigkeit beeinträchtigenden Dauerbelegung (D1-D4) einer Kornaufnahme (16) die zyklisch wiederkehrenden Unregelmäßigkeiten (U, U1-U8) beim Erfassen der Saatkörner (S) unter Berücksichtigung der Drehzahl des Vereinzelungselements (14) auswertet.

5. Verfahren nach einem der vorstehenden Ansprüche,
**dadurch gekennzeichnet, dass** die elektronische Auswerteeinrichtung (22) zur Identifikation einer die Kornaufnahmefähigkeit beeinträchtigenden Dauerbelegung (D1-D4) einer Kornaufnahme (16) die zyklisch wiederkehrenden Unregelmäßigkeiten (U, U1-U8) beim Erfassen der Saatkörner (S)
- unter Berücksichtigung der Vortriebsgeschwindigkeit und/oder eines eingestellten Ablageabstands für die Saatkörner; und/oder
- unter Berücksichtigung der Anzahl der Kornaufnahmen (16) des Vereinzelungselements (14)
auswertet.

6. Verfahren nach einem der vorstehenden Ansprüche,
**dadurch gekennzeichnet, dass** die elektronische Auswerteeinrichtung (22) zur Identifikation einer die Kornaufnahmefähigkeit beeinträchtigenden Dauerbelegung (D1-D4) einer Kornaufnahme (16) den zeitlichen Abstand (Δt) von aufeinanderfolgenden Saatkörnern (S) untersucht.

7. Verfahren nach einem der vorstehenden Ansprüche,
**dadurch gekennzeichnet, dass** die elektronische Auswerteeinrichtung (22) zur Identifikation einer die Kornaufnahmefähigkeit beeinträchtigenden Dauerbelegung (D1-D4) einer Kornaufnahme (16) zyklisch wiederkehrende Erhöhungen der zeitlichen Abstände (Δt) von aufeinanderfolgenden Saatkörnern (S) ermittelt, welche außerhalb eines zeitlichen Toleranzbereichs (T) für die zeitlichen Abstände (Δt) von aufeinanderfolgenden Saatkörnern (S) liegen.

8. Verfahren nach einem der vorstehenden Ansprüche,
**dadurch gekennzeichnet, dass** die elektronische Auswerteeinrichtung (22) zur Identifikation einer die Kornaufnahmefähigkeit beeinträchtigenden Dauerbelegung (D1-D4) einer Kornaufnahme (16) zyklisch wiederkehrende Saatkorn-Fehlstellen ermittelt.

9. Verfahren nach einem der vorstehenden Ansprüche,
**dadurch gekennzeichnet, dass** die elektronische Auswerteeinrichtung (22) zur Identifikation einer die Kornaufnahmefähigkeit beeinträchtigenden Dauerbelegung (D1-D4) einer Kornaufnahme (16) zyklisch wiederkehrende Abweichungen von einem Sollzeitabstand zwischen aufeinanderfolgenden Saatkörnern (S) ermittelt.

10. Verfahren nach einem der vorstehenden Ansprüche,
**dadurch gekennzeichnet, dass** die Korndetektionseinrichtung (20) die Saatkörner (S) innerhalb der Kornaufnahmen (16) des Vereinzelungselements (14) erfasst.

11. Verfahren nach Anspruch 10,
**dadurch gekennzeichnet, dass** die Korndetektionseinrichtung (20) in der Kornvereinzelungseinrichtung (10) angeordnet ist, wobei ein Detektionsbereich der Korndetektionseinrichtung (20) auf einen Durchlaufpfad der Kornaufnahmen (16) des Vereinzelungselements (14) gerichtet ist und die Korndetektionseinrichtung (20) Saatkörner (S) innerhalb der Kornaufnahmen (16) des Vereinzelungselements (14) während der Rotationsbewegung des Vereinzelungselements (14) erfasst.

12. Verfahren nach einem der vorstehenden Ansprüche,
**dadurch gekennzeichnet, dass** die elektronische Auswerteeinrichtung (22) die Anzahl von dauerbelegten Kornaufnahmen (16) ermittelt.

13. Überwachungssystem (28) zum Überwachen der Aufnahmefähigkeit von Kornaufnahmen (16) eines Vereinzelungselements (14) einer Kornvereinzelungseinrichtung (10) einer Einzelkornsämaschine, mit
- einer Korndetektionseinrichtung (20) zum Erfassen von Saatkörnern (S);
wobei eine elektronische Auswerteeinrichtung (22), welche dazu eingerichtet ist, zur Identifikation einer die Kornaufnahmefähigkeit beeinträchtigenden Dauerbelegung (D1-D4) einer Kornaufnahme (16) zyklisch wiederkehrende Unregelmäßigkeiten (U, U1-U8) beim Erfassen der Saatkörner (S) zu ermitteln,
wobei das Überwachungssystem (28) dazu eingerichtet ist das Verfahren nach einem der Ansprüche 1 bis 12 auszuführen.

14. Einzelkornsämaschine, mit
- einem Überwachungssystem (28) zum Überwachen der Aufnahmefähigkeit von Kornaufnahmen (16) eines Vereinzelungselements (14) einer Kornvereinzelungseinrichtung (10) der Einzelkornsämaschine;
**dadurch gekennzeichnet, dass** das Überwachungssystem (28) nach Anspruch 13 ausgebildet ist.

## Claims

1. Method for monitoring the capacity to receive grain intakes (16) of a separation element (14) of a grain separation device (10) of a precision seed drill, comprising the step of:
- detecting seeds (S) by means of a grain detection device (20);
wherein in order to identify a permanent occupancy (D1-D4) of a grain receptacle (16) that impairs the grain intake capacity, an electronic evaluation device (22) determines cyclically recurring irregularities (U, U1-U8) when the seeds (S) are detected, wherein the electronic evaluation device (22) logs the identification of a permanent occupancy (D1-D4) of a grain receptacle (16) that impairs the grain intake capacity and/or upon identification of a permanent occupancy (D1-D4) of a grain receptacle (16) that impairs the grain intake capacity, causes an information measure that is directed at the machine operator to be carried out.

2. Method according to claim 1,
**characterized in that** in order to determine the cyclically recurring irregularities (U, U1-U8), the electronic evaluation device (22) analyzes the following when the seeds (S) are detected
- a sensor signal of the grain detection device (20) designed as a grain detection sensor; or
- image recordings of the grain detection device (20) designed as a grain detection camera.

3. Method according to claim 1 or 2,
**characterized in that** the grain detection device (20) detects separate seeds (S) along a grain transport path for seeds (S) and/or within a seed line (18).

4. Method according to any of the preceding claims,
**characterized in that** the separation element (14) performs a rotational movement during the separating process,
wherein in order to identify a permanent occupancy (D1-D4) of a grain receptacle (16) that impairs the grain intake capacity, the electronic evaluation device (22) evaluates the cyclically recurring irregularities (U, U1-U8) when the seeds (S) are detected, taking into account the speed of the separation element (14).

5. Method according to any of the preceding claims,
**characterized in that** in order to identify a permanent occupancy (D1-D4) of a grain receptacle (16) that impairs the grain intake capacity, the electronic evaluation device (22) evaluates the cyclically recurring irregularities (U, U1-U8) when the seeds (S) are detected, taking into account the following
- the forward speed and/or a set seed placement distance; and/or
- the number of grain receptacles (16) of the separation element (14).

6. Method according to any of the preceding claims,
**characterized in that** in order to identify a permanent occupancy (D1-D4) of a grain receptacle (16) that impairs the grain intake capacity, the electronic evaluation device (22) analyzes the time interval (Δt) between successive seeds (S).

7. Method according to any of the preceding claims,
**characterized in that** in order to identify a permanent occupancy (D1-D4) of a grain receptacle (16) that impairs the grain intake capacity, the electronic evaluation device (22) determines cyclically recurring increases in the time intervals (Δt) between successive seeds (S) that lie outside a time tolerance range (T) for the time intervals (Δt) between successive seeds (S).

8. Method according to any of the preceding claims,
**characterized in that** in order to identify a permanent occupancy (D1-D4) of a grain receptacle (16) that impairs the grain intake capacity, the electronic evaluation device (22) determines cyclically recurring seed defects.

9. Method according to any of the preceding claims,
**characterized in that** in order to identify a permanent occupancy (D1-D4) of a grain receptacle (16) that impairs the grain intake capacity, the electronic evaluation device (22) determines cyclically recurring deviations from a target time interval between successive seeds (S).

10. Method according to any of the preceding claims,
**characterized in that** the grain detection device (20) detects the seeds (S) within the grain receptacles (16) of the separation element (14).

11. Method according to claim 10,
**characterized in that** the grain detection device (20) is arranged in the grain separation device (10), wherein a detection region of the grain detection device (20) is directed onto a passage path of the grain receptacles (16) of the separation element (14) and the grain detection device (20) detects seeds (S) within the grain receptacles (16) of the separation element (14) during the rotational movement of the separation element (14).

12. Method according to any of the preceding claims,
**characterized in that** the electronic evaluation device (22) determines the number of permanently occupied grain receptacles (16).

13. Monitoring system (28) for monitoring the capacity of grain receptacles (16) of a separation element (14) of a grain separation device (10) of a precision seed drill, comprising
- a grain detection device (20) for detecting seeds (S);
wherein an electronic evaluation device (22) which is designed, in order to identify a permanent occupancy (D1-D4) of a grain receptacle (16) that impairs the grain intake capacity, to determine cyclically recurring irregularities (U, U1-U8) when the seeds (S) are detected,
wherein the monitoring system (28) is designed to carry out the method according to any of claims 1 to 12.

14. Precision seed drill, comprising
- a monitoring system (28) for monitoring the capacity of grain receptacles (16) of a separation element (14) of a grain separation device (10) of the precision seed drill;
**characterized in that** the monitoring system (28) is designed according to claim 13.

## Revendications

1. Procédé destiné à surveiller la capacité d'absorption de réceptacles de graines (16) d'un élément de séparation (14) d'un dispositif de séparation de graines (10) d'un semoir monograine, comportant l'étape consistant à :
- détecter des graines de semence (S) à l'aide d'un dispositif de détection de graines (20) ;
dans lequel un dispositif d'évaluation électronique (22) détermine des irrégularités (U, U1-U8) se répétant de manière cyclique lors de la détection des graines de semence (S), pour l'identification d'une occupation permanente (D1-D4) d'un réceptacle de graines (16), laquelle occupation permanente entrave la capacité d'absorption des graines, dans lequel le dispositif d'évaluation électronique (22) consigne l'identification d'une occupation permanente (D1-D4) d'un réceptacle de graines (16), laquelle occupation permanente entrave la capacité d'absorption des graines et/ou provoque, lors de l'identification d'une occupation permanente (D1-D4) d'un réceptacle de graines (16), laquelle occupation permanente entrave la capacité d'absorption des graines, l'exécution d'une mesure d'indication adressée à l'opérateur de la machine.

2. Procédé selon la revendication 1,
**caractérisé en ce que** le dispositif d'évaluation électronique (22) destiné à déterminer les irrégularités (U, U1-U8) se répétant de manière cyclique examine
- un signal de capteur du dispositif de détection de graines (20) réalisé sous la forme d'un capteur de détection de graines ; ou
- des captures d'image du dispositif de détection de graines (20) réalisé sous la forme d'une caméra de détection de graines
lors de la détection des graines de semence (S).

3. Procédé selon la revendication 1 ou 2,
**caractérisé en ce que** le dispositif de détection de graines (20) détecte des graines de semence (S) séparées le long d'un chemin de transport de graines pour des graines de semence (S) et/ou à l'intérieur d'une conduite à semence (18).

4. Procédé selon l'une des revendications précédentes,
**caractérisé en ce que** l'élément de séparation (14) exécute un mouvement de rotation pendant le processus de séparation,
dans lequel le dispositif d'évaluation électronique (22) évalue les irrégularités (U, U1-U8) se répétant de manière cyclique lors de la détection des graines de semence (S) en tenant compte de la vitesse de rotation de l'élément de séparation (14), pour l'identification d'une occupation permanente (D1-D4) d'un réceptacle de graines (16), laquelle occupation permanente entrave la capacité d'absorption des graines.

5. Procédé selon l'une des revendications précédentes,
**caractérisé en ce que** le dispositif d'évaluation électronique (22) évalue, pour l'identification d'une occupation permanente (D1-D4) d'un réceptacle de graines (16), laquelle occupation permanente entrave la capacité d'absorption des graines, les irrégularités (U, U1-U8) se répétant de manière cyclique lors de la détection des graines de semence (S)
- en tenant compte de la vitesse d'avance et/ou d'une distance de semis réglée pour les graines de semence ; et/ou
- en tenant compte du nombre de réceptacles de graines (16) de l'élément de séparation (14).

6. Procédé selon l'une des revendications précédentes,
**caractérisé en ce que** le dispositif d'évaluation électronique (22) examine l'intervalle de temps (Δt) entre des graines de semence (S) successives pour identifier une occupation permanente (D1-D4) d'un réceptacle de graines (16) qui entrave la capacité d'absorption des graines.

7. Procédé selon l'une des revendications précédentes,
**caractérisé en ce que** le dispositif d'évaluation électronique (22) détermine, pour l'identification d'une occupation permanente (D1-D4) d'un réceptacle de graines (16), laquelle occupation permanente entrave la capacité d'absorption des graines, des augmentations répétées de manière cyclique des intervalles de temps (Δt) entre des graines de semence (S) successives, lesquels intervalles de temps se situent en dehors d'une plage de tolérance temporelle (T) pour les intervalles de temps (Δt) entre des graines de semence (S) successives.

8. Procédé selon l'une des revendications précédentes,
**caractérisé en ce que** le dispositif d'évaluation électronique (22) détermine, pour l'identification d'une occupation permanente (D1-D4) d'un réceptacle de graines (16), laquelle occupation permanente entrave la capacité d'absorption des graines, des erreurs de positionnement de graines, lesquelles erreurs de positionnement se répètent de manière cyclique.

9. Procédé selon l'une des revendications précédentes,
**caractérisé en ce que** le dispositif d'évaluation électronique (22) détermine, pour l'identification d'une occupation permanente (D1-D4) d'un réceptacle de graines (16) laquelle occupation permanente entrave la capacité d'absorption des graines, des écarts répétés de manière cyclique par rapport à un intervalle de temps de consigne entre des graines de semence (S) successives.

10. Procédé selon l'une des revendications précédentes,
**caractérisé en ce que** le dispositif de détection de graines (20) détecte les graines de semence (S) à l'intérieur des réceptacles de graines (16) de l'élément de séparation (14).

11. Procédé selon la revendication 10,
**caractérisé en ce que** le dispositif de détection de graines (20) est disposé dans le dispositif de séparation de graines (10), dans lequel une zone de détection du dispositif de détection de graines (20) est dirigée vers un chemin de passage des réceptacles de graines (16) de l'élément de séparation (14) et le dispositif de détection de graines (20) détecte des graines de semence (S) à l'intérieur des réceptacles de graines (16) de l'élément de séparation (14) pendant le mouvement de rotation de l'élément de séparation (14).

12. Procédé selon l'une des revendications précédentes,
**caractérisé en ce que** le dispositif d'évaluation électronique (22) détermine le nombre de réceptacles de graines (16) occupés en permanence.

13. Système de surveillance (28) destiné à surveiller la capacité d'absorption de réceptacles de graines (16) d'un élément de séparation (14) d'un dispositif de séparation de graines (10) d'un semoir monograine, comportant
- un dispositif de détection de graines (20) destiné à détecter des graines de semence (S) ;
dans lequel un dispositif d'évaluation électronique (22), lequel est conçu pour déterminer des irrégularités (U, U1-U8) se répétant de manière cyclique lors de la détection des graines de semence (S), pour l'identification d'une occupation permanente (D1-D4) d'un réceptacle de graines (16), laquelle occupation permanente entrave la capacité d'absorption des graines,
dans lequel le système de surveillance (28) est conçu pour exécuter le procédé selon l'une des revendications 1 à 12.

14. Semoir monograine, comportant
- un système de surveillance (28) destiné à surveiller la capacité d'absorption de réceptacles de graines (16) d'un élément de séparation (14) d'un dispositif de séparation de graines (10) du semoir monograine ;
**caractérisé en ce que** le système de surveillance (28) est réalisé selon la revendication 13.
